# FASCICULE DE BREVET EUROPEEN

(11) **EP 3 394 398 B1**
(45) Date de publication et mention de la délivrance du brevet: **27.04.2022**
(21) Numéro de dépôt: 16831499.5
(22) Date de dépôt: 21.12.2016
(51) Int. Cl.: F01D 5/14, F01D 5/28

(54) **BOUCLIER DE BORD D'ATTAQUE**
VORDERKANTENUMMANTELUNG
LEADING EDGE SHIELD

(30) Priorité: 21.12.2015 FR 1563007
(43) Date de publication de la demande: 31.10.2018
(73) Titulaire: Safran Aircraft Engines, 75015 Paris (FR)
(72) Inventeur: POUZADOUX, Frédéric Jean-Bernard, 77550 Moissy-Cramayel Cedex (FR); BASSOT, Alain Jacques Michel, 77550 Moissy-Cramayel Cedexx (FR); GUIVARC'H, Jérémy, 77550 Moissy-Cramayel Cedex (FR); ROMERO, Jean-Louis, 77550 Moissy-Cramayel Cedex (FR); RUF, Thibault, 77550 Moissy-Cramayel Cedex (FR)
(74) Mandataire: Cabinet Beau de Loménie
(86) Numéro de dépôt international: PCT/FR2016/053607
(87) Numéro de publication internationale: WO 2017/109407

(56) Documents cités:
- EP-A1- 2 022 942
- WO-A1-2014/055499
- WO-A2-2014/196987
- DE-C1- 4 411 679
- FR-A1- 2 994 708
- GB-A- 2 482 247

## Description

### Arrière-plan de l'invention

La présente invention concerne un bouclier de bord d'attaque pour aube de turbomachine. On entend par « turbomachine », dans ce contexte, toute machine dans laquelle peut s'opérer un transfert d'énergie entre un écoulement de fluide et au moins un aubage, comme, par exemple, un compresseur, une pompe, une turbine, une hélice, ou bien une combinaison d'au moins deux de ceux-ci.

De tels boucliers de bord d'attaque sont typiquement destinés à protéger les bords d'attaque d'aubes tournantes ou d'aubes directrices contre les impacts. On entend par « aubes », dans ce contexte, tant les aubes de soufflante que les pales d'hélice aérienne. Afin de limiter leur poids, ces aubes sont typiquement principalement formées d'un corps d'aube en composite à matrice organique, par exemple en polymère, renforcée par des fibres. Bien que ces matériaux présentent des qualités mécaniques généralement très favorables, en particulier par rapport à leur masse, ils présentent une certaine sensibilité aux impacts ponctuels. Des boucliers, typiquement en matériau métallique hautement résistant, comme les alliages de titane, sont donc normalement installés sur les bords d'attaque de telles aubes, afin de les protéger contre ces impacts. Ces boucliers prennent normalement la forme d'une fine ailette intrados et une fine ailette extrados jointes par une section plus épaisse chevauchant le bord d'attaque, l'ensemble épousant la forme de l'aube sur le bord d'attaque et des sections adjacentes de l'intrados et de l'extrados. Les ailettes intrados et extrados s'étendent en hauteur et en longueur sur ces sections de, respectivement, l'intrados et l'extrados de l'aube, et servent principalement à assurer le positionnement et la fixation du bouclier sur le bord d'attaque, mais aussi à distribuer la force d'un impact et dissiper son énergie sur une plus grande surface du corps d'aube. Ainsi, en cas d'impact sur le bouclier de bord d'attaque, des ondes de déformation vont se propager à travers ce bouclier, y compris les ailettes, jusqu'à y être entièrement dissipées. Toutefois, dans certains cas, cette propagation peut créer des pics de déformation pouvant aller jusqu'à provoquer un décollement partiel d'une ailette.

### Objet et résumé de l'invention

La présente divulgation vise à remédier à ces inconvénients, en proposant un bouclier de bord d'attaque pour aube de turbomachine qui permette de plus efficacement dissiper l'énergie des impacts et de limiter les potentiels décollements. Z L'invention est présentée dans la partie caractérisante de la revendication indépendante 1.

Dans au moins un mode de réalisation, ce but est atteint grâce au fait que, dans ledit bouclier de bord d'attaque, qui peut être en matériau métallique et comporte une ailette intrados et une ailette extrados, s'étendant chacune en hauteur d'un bord inférieur à un bord supérieur et en longueur du bord d'attaque à un bord arrière respectif, et reliées l'une à l'autre à travers le bord d'attaque.

Grâce à ces dispositions, la propagation des ondes de déformation à travers l'ailette extrados en cas d'impact est affectée de manière à obtenir une dissipation plus rapide et efficace de l'énergie de l'impact. En outre, cette forme présente aussi l'avantage supplémentaire de former un obstacle au décollement de l'ailette extrados à partir de son bord supérieur et/ou de son bord arrière.

Pour mieux dissiper l'énergie d'impact, ledit segment du bord arrière de l'ailette extrados peut notamment être plus proche du bord supérieur que du bord inférieur de l'ailette extrados. En outre, pour multiplier l'effet de dissipation, ledit bord arrière de l'ailette extrados peut présenter une pluralité de segments formés tels que décrits dans l'invention.

Afin d'éviter les concentrations d'efforts, le bord arrière de l'ailette extrados présente une continuité de tangence sur toute la hauteur du bouclier, l'évolution de la longueur de l'ailette extrados étant ainsi graduelle et pouvant notamment éviter des courbures trop prononcées, correspondant à des rayons de courbure en dessous d'un minimum prédéterminé.

La présente divulgation concerne aussi une aube s'étendant en hauteur d'un pied d'aube à une tête d'aube et comprenant un corps d'aube et un tel bouclier de bord d'attaque assemblé sur le corps d'aube, le corps d'aube étant en matériau composite à matrice organique, par exemple en polymère, renforcée par des fibres, le bouclier de bord d'attaque étant en un matériau ayant une meilleure résistance aux impacts ponctuels que le matériau composite du corps d'aube.

Dans cette aube, le bord d'attaque peut notamment présenter au moins localement une flèche positive égale ou supérieure à 30°, pour un meilleur rendement aérodynamique. La forme du bord arrière de l'ailette extrados est en effet particulièrement utile pour dissiper les impacts à proximité du bord d'attaque d'une aube présentant une telle flèche.

La présente divulgation concerne aussi une turbomachine comprenant une pluralité de telles aubes, une soufflante comprenant une pluralité de telles aubes et un turboréacteur à double flux comprenant une telle soufflante. DE4411679 montre les caractéristiques techniques du préambule de la revendication indépendante 1.

### Brève description des dessins

L'invention sera bien comprise et ses avantages apparaîtront mieux, à la lecture de la description détaillée qui suit, de modes de réalisation représentés à titre d'exemples non limitatif. La description se réfère aux dessins annexés sur lesquels :
- la figure 1 est une vue schématique en perspective d'un turboréacteur à double flux ;
- la figure 2 est une vue schématique en perspective du côté extrados d'une aube tournante de la soufflante du turboréacteur de la figure 1 selon un premier mode de réalisation de l'aube ;
- la figure 3 est une vue partielle en coupe de l'aube de la figure 2 selon le plan III-III ; et
- la figure 4 est une vue schématique en perspective du côté extrados d'une aube tournante de la soufflante du turboréacteur de la figure 1 selon un deuxième mode de réalisation de l'aube.

### Description détaillée de l'invention

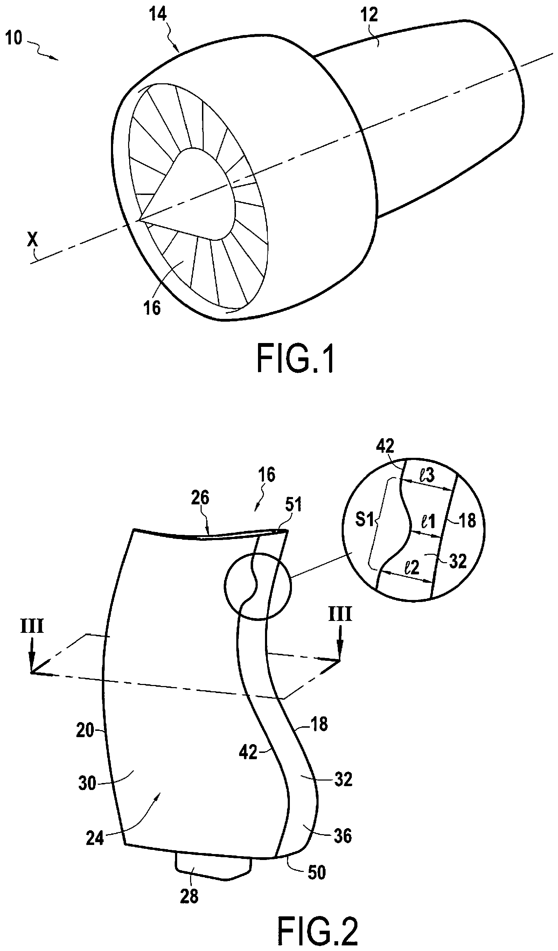

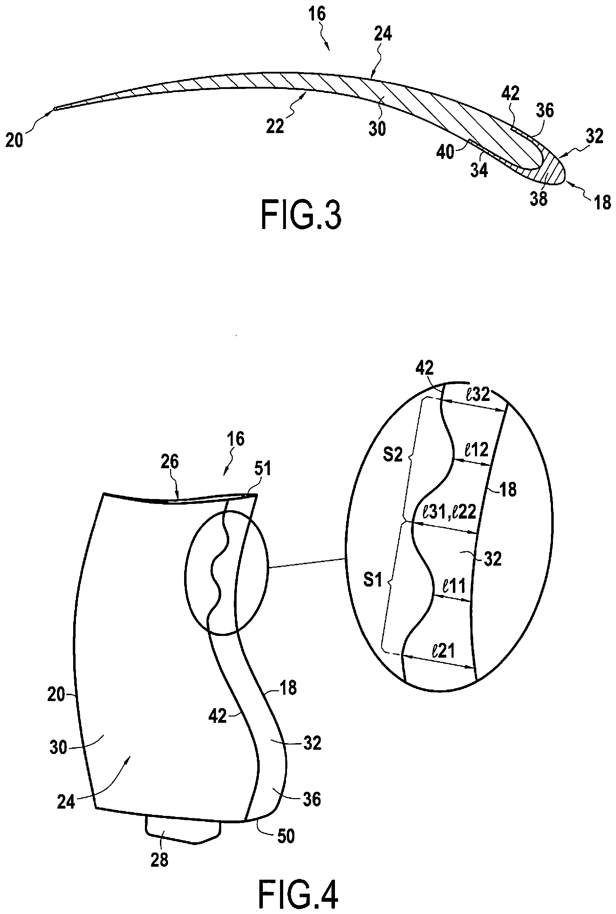

La figure 1 illustre un turboréacteur à double flux 10 comprenant un groupe générateur de gaz 12 et une soufflante 14. Cette soufflante 14 comprend une pluralité d'aubes tournantes 16, arrangées radialement autour d'un axe central X, profilées aérodynamiquement de manière à impulser l'air par leur rotation. Ainsi, comme illustré sur les figures 2 et 3, chaque aube 16 présente un bord d'attaque 18, un bord de fuite 20, un intrados 22, un extrados 24, une tête d'aube 26 et un pied d'aube 28.

En fonctionnement normal, le vent relatif est sensiblement orienté vers le bord d'attaque 18 de chaque aube 16. Ainsi, ce bord d'attaque 18 est particulièrement exposé aux impacts. En particulier quand l'aube 16 comprend un corps d'aube 30 en matériau composite, notamment à matrice polymère renforcée par des fibres, il convient donc de protéger le bord d'attaque 18 avec un bouclier de bord d'attaque 32 intégré à chaque aube. En d'autres termes, le bouclier de bord d'attaque 32 est assemblé sur le corps d'aube 30.

Le bouclier de bord d'attaque 32 est fabriqué en un matériau ayant une meilleure résistante aux impacts ponctuels que le matériau composite du corps d'aube 30. Le bouclier de bord d'attaque 32 est principalement métallique, et plus spécifiquement en alliage à base de titane, comme par exemple le TA6V (Ti-6Al-4V). Le bouclier de bord d'attaque 32 pourrait également être en acier ou en alliage métallique communément désigné par la marque déposée Inconel^{™}. On parle par la suite d'Inconel pour désigner un alliage à base de fer alliés avec du nickel et du chrome.

Comme illustré notamment sur la figure 3, le bouclier de bord d'attaque 32 comporte une ailette intrados 34, une ailette extrados 36, et une section centrale 38 plus épaisse, destinée à chevaucher un bord du corps d'aube 30 et reliant l'ailette intrados 34 et l'ailette extrados 36 au bord d'attaque 18. Les ailettes intrados et extrados 34, 36 assurent le positionnement du bouclier 32 sur le corps d'aube 30, mais aussi la dissipation de l'énergie d'impact. Les ailettes intrados et extrados 34, 36 et s'étendent chacune en hauteur sur une hauteur H d'un bord inférieur 50 à un bord supérieur 51 et en longueur du bord d'attaque 18 au bord arrière 40, 42 correspondant.

Afin de mieux dissiper l'énergie des ondes de déformation se propageant à travers le bouclier 32 suite à un impact, le bord arrière 42 de l'ailette extrados n'est pas parallèle au bord d'attaque 18 sur toute sa longueur, mais présente, plus près du bord supérieur 51 que du bord inférieur 50, par exemple au-delà d'au moins 60% de la hauteur H du bouclier 32 à partir du bord inférieur 50, un segment S1 formé tel que la longueur l1 de l'ailette extrados 36 à l'intérieur de ce segment soit inférieure à la longueur l2,l3 de l'ailette extrados 36 à chaque extrémité de ce segment 52. La longueur l1 peut ainsi arriver à être inférieure d'au moins 10%, voire 15%, voire même 30%, de chacune des longueurs l2,l3. Cette diminution locale de la longueur de l'ailette extrados 36 non seulement facilite la dissipation de l'énergie d'impact en compliquant la propagation des ondes de déformation sur l'ailette extrados 36, mais peut aussi contribuer à empêcher la propagation d'un décollement local du bouclier 32 le long du bord arrière 42.

Bien que dans ce premier mode de réalisation le bord arrière 42 ne présente qu'un seul segment S1 formé tel que la longueur l1 de l'ailette extrados 36 à l'intérieur de ce segment soit inférieure à la longueur l2,l3 de l'ailette extrados 36 à chaque extrémité de ce segment S1, il est aussi envisageable de combiner plusieurs tels segments successifs afin de renforcer leurs effets. Ainsi, dans un deuxième mode de réalisation, illustré sur la figure 4, le bord arrière 42 de l'ailette extrados 36 présente deux segments S1,S2 successifs formés tels que la longueur l11,l12 de l'ailette extrados 36 à l'intérieur de chaque segment S1,S2 soit inférieure à la longueur l21,l122,l31,l32 de l'ailette extrados 36 à chaque extrémité du même segment S1,S2. Les éléments restants du bouclier 32 et l'aube 16 suivant ce deuxième mode de réalisation sont tous analogues à ceux du premier mode de réalisation et reçoivent en conséquence les mêmes chiffres de référence sur le dessin.

Quoique la présente invention ait été décrite en se référant à un exemple de réalisation spécifique, il est évident que des différentes modifications et changements peuvent être effectués sur ces exemples sans sortir de la portée générale de l'invention telle que définie par les revendications. En outre, des caractéristiques individuelles des différents modes de réalisation évoqués peuvent être combinées dans des modes de réalisation additionnels. Par conséquent, la description et les dessins doivent être considérés dans un sens illustratif plutôt que restrictif.

## Revendications

1. Bouclier de bord d'attaque (32) pour aube (16) de turbomachine, ledit bouclier de bord d'attaque (32) comportant une ailette intrados (34) et une ailette extrados (36), s'étendant chacune en hauteur d'un bord inférieur (50) à un bord supérieur (51) et en longueur du bord d'attaque à un bord arrière (40,42) respectif, et reliées l'une à l'autre à travers le bord d'attaque, et dans lequel le bord arrière (42) de l'ailette extrados (36) présente une continuité de tangence sur toute la hauteur du bouclier de bord d'attaque (32) au moins un segment (S1,S2) qui s'étend avec continuité de tangence entre deux extrémités arrondies , le bouclier étant **caractérisé en ce que** le segment est formé tel que une longueur (l1,l11,l12) de l'ailette extrados (36) à l'intérieur de ce segment (S1,S2) soit inférieure à la longueur (l2,l3,l21,l22,l31,l32) de l'ailette extrados (36) à chaque extrémité arrondie de ce segment (S1,S2) et en dehors de l'au moins un segment (S1,S2).

2. Bouclier de bord d'attaque (32) suivant la revendication 1, dans lequel ledit segment (S1,S2) du bord arrière (42) de l'ailette extrados (36) est plus proche du bord supérieur (51) que du bord inférieur (50) de l'ailette extrados (36).

3. Bouclier de bord d'attaque (32) suivant la revendication 1 ou 2, dans lequel la longueur (l1,l11,l12) de l'ailette extrados (36) à l'intérieur de ce segment (S1,S2) est inférieure d'au moins 10% à la longueur (l2,l3,l21,l22,l31,l32) de l'ailette extrados (36) à chaque extrémité de ce segment (S1,S2).

4. Bouclier de bord d'attaque (32) suivant la revendication 3, dans lequel la longueur (l1,l11,l12) de l'ailette extrados (36) à l'intérieur de ce segment (S1,S2) est inférieure d'au moins 15% à la longueur (l2,l3,l21,l22,l31,l32) de l'ailette extrados (36) à chaque extrémité de ce segment (S1,S2).

5. Bouclier de bord d'attaque (32) suivant la revendication 4, dans lequel la longueur (l1,l11,l12) de l'ailette extrados (36) à l'intérieur de ce segment (S1,S2) est inférieure d'au moins 30% à la longueur (l2,l3,l21,l22,l31,l32) de l'ailette extrados (36) à chaque extrémité de ce segment (S1,S2).

6. Bouclier de bord d'attaque (32) suivant l'une quelconque des revendications précédentes, dans lequel ledit bord arrière (42) de l'ailette extrados (36) présente une pluralité de segments (S1,S2) formés tels que la longueur (l11,l12) de l'ailette extrados (36) à l'intérieur de chaque segment (S1,S2) soit inférieure à la longueur (l21,l22,l31,l32) de l'ailette extrados (36) à chaque extrémité du même segment (S1,S2).

7. Bouclier (32) suivant l'une quelconque des revendications précédentes, en matériau métallique.

8. Aube (16) s'étendant en hauteur d'un pied d'aube à une tête d'aube et comprenant un corps d'aube (30) et un bouclier de bord d'attaque (32) suivant l'une quelconque des revendications précédentes assemblé sur le corps d'aube (30), le corps d'aube (30) étant en matériau composite à matrice organique, renforcée par des fibres, et le bouclier de bord d'attaque (32) étant en un matériau ayant une meilleure résistance aux impacts ponctuels que le matériau composite du corps d'aube (30).

9. Aube (16) suivant la revendication 8, dans laquelle le bord d'attaque présente au moins localement une flèche positive égale ou supérieure à 30°.

10. Turbomachine comprenant une pluralité d'aubes (16) selon l'une quelconque des revendications 8 ou 9.

11. Soufflante (14) comprenant une pluralité d'aubes (16) selon l'une quelconque des revendications 8 ou 9.

12. Turboréacteur à double flux (10) comprenant une soufflante selon la revendication 11.

## Patentansprüche

1. Vorderkantenummantelung (32) für Turbomaschinenschaufel (16), wobei die Vorderkantenummantelung (32) einen Druckseitenflügel (34) und einen Saugseitenflügel (36) umfasst, die sich jeweils in der Höhe von einer unteren Kante (50) zu einer oberen Kante (51) und in der Länge von der Vorderkante zu einer entsprechenden hinteren Kante (40, 42) erstrecken und durch die Vorderkante miteinander verbunden sind, und wobei die hintere Kante (42) des Saugseitenflügels (36) über die gesamte Höhe der Vorderkantenummantelung (32) eine Tangentenkontinuität und mindestens ein Segment (S1, S2) aufweist, das sich mit Tangentenkontinuität zwischen zwei abgerundeten Enden erstreckt, wobei die Ummantelung **dadurch gekennzeichnet ist, dass** das Segment derart gebildet ist, dass eine Länge (l1, l11, l12) des Saugseitenflügels (36) im Inneren dieses Segments (S1, S2) kleiner als die Länge (l2, l3, l21, l22, l31, l32) des Saugseitenflügels (36) an jedem abgerundeten Ende dieses Segments (S1, S2) und außerhalb des mindestens einen Segments (S1, S2) ist.

2. Vorderkantenummantelung (32) nach Anspruch 1, wobei das Segment (S1, S2) der hinteren Kante (42) des Saugseitenflügels (36) sich näher an der oberen Kante (51) als an der unteren Kante (50) des Saugseitenflügels (36) befindet.

3. Vorderkantenummantelung (32) nach Anspruch 1 oder 2, wobei die Länge (l1, l11, l12) des Saugseitenflügels (36) im Inneren dieses Segments (S1, S2) um mindestens 10% kleiner als die Länge (l2, l31, l21, l22l, l31, l32) des Saugseitenflügels (36) an jedem Ende dieses Segments (S1, S2) ist.

4. Vorderkantenummantelung (32) nach Anspruch 3, wobei die Länge (l1, l11, l12) des Saugseitenflügels (36) im Inneren dieses Segments (S1, S2) um mindestens 15% kleiner als die Länge (l2, l3, l21, l22, l31, l32) des Saugseitenflügels (36) an jedem Ende dieses Segments (S1, S2) ist.

5. Vorderkantenummantelung (32) nach Anspruch 4, wobei die Länge (l1, l11, l12) der Saugseitenflügels (36) im Inneren dieses Segments (S1, S2) um mindestens 30% kleiner als die Länge (l2, l3, l21, l22, l31, l32) des Saugseitenflügels (36) an jedem Ende dieses Segments (S1, S2) ist.

6. Vorderkantenummantelung (32) nach einem der vorhergehenden Ansprüche, wobei die hintere Kante (42) des Saugseitenflügels (36) eine Vielzahl von Segmenten (S1, S2) aufweist, die derart gebildet sind, dass die Länge (l11, l12) des Saugseitenflügels (36) im Inneren von jedem Segment (S1, S2) kleiner als die Länge (l21, l22, l31, l32) des Saugseitenflügels (36) an jedem Ende des gleichen Segments (S1, S2) ist.

7. Ummantelung (32) nach einem der vorhergehenden Ansprüche aus Metallmaterial.

8. Schaufel (16), die sich in der Höhe von einem Schaufelfuß zu einem Schaufelkopf erstreckt und einen Schaufelköper (30) und eine Vorderkantenummantelung (32) nach einem der vorhergehenden Ansprüche umfasst, die an dem Schaufelkörper (30) montiert ist, wobei der Schaufelkörper (30) aus Verbundmaterial mit organischer Matrix besteht, das durch Fasern verstärkt ist, und die Vorderkantenummantelung (32) aus einem Material besteht, das eine bessere Festigkeit gegenüber punktuellen Stößen aufweist als das Verbundmaterial des Schaufelkörpers (30).

9. Schaufel (16) nach Anspruch 8, wobei die Vorderkante zumindest lokal eine positive Durchbiegung von gleich oder höher als 30° aufweist.

10. Turbomaschine, die eine Vielzahl von Schaufeln (16) nach einem der Ansprüche 8 oder 9 umfasst.

11. Gebläse (14), das eine Vielzahl von Schaufeln (16) nach einem der Ansprüche 8 oder 9 umfasst.

12. Zweistromtriebwerk (10), das ein Gebläse nach Anspruch 11 umfasst.

## Claims

1. A leading-edge shield (32) for a turbomachine blade (16), said leading-edge shield (32) comprising a pressure-side wing (34) and a suction-side wing (36), each extending heightwise from a bottom edge (50) to a top edge (51) and lengthwise from the leading edge to a respective trailing edge (40, 42), and connected together via the leading edge, and wherein the rear edge (42) of the suction-side wing (36) presents tangential continuity over the whole height of the leading-edge shield (32) and at least one shaped segment (S1, S2) that extends with tangential continuity between two rounded ends, the shield being **characterised in that** the segment is shaped in such a manner that the length (ℓ1, ℓ11, ℓ12) of the suction-side wing (36) within this segment (S1, S2) is shorter than the length (ℓ2, ℓ3, ℓ21, ℓ22, ℓ31, ℓ32) of the suction-side wing (36) at each rounded end of this segment (S1, S2) and outside the at least one segment (S1, S2).

2. A leading-edge shield (32) according to claim 1, wherein said segment (S1, S2) of the rear edge (42) of the suction-side wing (36) is closer to the top edge (51) than to the bottom edge (50) of the suction-side wing (36) .

3. A leading-edge shield (32) according to claim 1 or claim 2, wherein the length (ℓ1, ℓ11, ℓ12) of the suction-side wing (36) within this segment (S1, S2) is at least 10% shorter than the length (ℓ2, ℓ3, ℓ21, ℓ22, ℓ31, ℓ32) of the suction-side wing (36) at each end of this segment (S1, S2).

4. A leading-edge shield (32) according to claim 3, wherein the length (ℓ1, ℓ11, ℓ12) of the suction-side wing (36) within this segment (S1, S2) is at least 15% shorter than the length (ℓ2, ℓ3, ℓ21, ℓ22, ℓ31, ℓ32) of the suction-side wing (36) at each end of this segment (S1, S2).

5. A leading-edge shield (32) according to claim 4, wherein the length (ℓ1, ℓ11, ℓ12) of the suction-side wing (36) within this segment (S1, S2) is at least 30% shorter than the length (ℓ2, ℓ3, ℓ21, ℓ22, ℓ31, ℓ32) of the suction-side wing (36) at each end of this segment (S1, S2).

6. A leading-edge shield (32) according to any preceding claim, wherein said rear edge (42) of the suction-side wing (36) presents a plurality of shaped segments (S1, S2) that are shaped in such a manner that the length (ℓ11, ℓ12) of the suction-side wing (36) within each segment (S1, S2) is shorter than the length (ℓ21, ℓ22, ℓ31, ℓ32) of the suction-side wing (36) at each end of the same segment (S1, S2).

7. A shield (32) according to any preceding claim made of metal material.

8. A blade (16) extending heightwise from a blade root to a blade tip and comprising a blade body (30) and a leading-edge shield (32) according to any preceding claim assembled on the blade body (30), the blade body (30) being made of fiber-reinforced organic matrix composite material, and the leading-edge shield (32) being made of a material that withstands point impacts better than the composite material of the blade body (30).

9. A blade (16) according to claim 8, wherein the leading edge presents, at least locally, back sweep equal to or greater than 30°.

10. A turbomachine including a plurality of blades (16) according to claim 8 or claim 9.

11. A fan (14) including a plurality of blades (16) according to claim 8 or claim 9.

12. A turbofan engine (10) including a fan according to claim 11.
